# EUROPEAN PATENT APPLICATION

(11) **EP 4 170 506 A1**
(43) Date of publication of application: **26.04.2023**
(21) Application number: 22200856.7
(22) Date of filing: 11.10.2022
(51) Int. Cl.: G06F 12/02

(54) **SYSTEMS, METHODS, AND DEVICES FOR ORDERED ACCESS OF DATA IN BLOCK MODIFIED MEMORY**

(30) Priority: 19.10.2021 US 202163257555 P; 17.03.2022 US 202263321086 P; 18.05.2022 US 202217748018
(71) Applicant: Samsung Electronics Co., Ltd., Gyeonggi-do 16677 (KR)
(72) Inventor: KACHARE, Ramdas P., San Jose, CA, 95134 (US); ZHAO, Dongwan, San Jose, CA, 95134 (US)
(74) Representative: Kuhnen & Wacker Patent- und Rechtsanwaltsbüro PartG mbB

(57) **Abstract**

A method may include receiving, at a memory system having a block modification characteristic, a write request for a data structure arranged in the memory, storing, based on the write request, data in the data structure, receiving, at the memory system, a read request for the data structure, reading, based on the read request, the data from the data structure, and indicating, based on the reading, the data for modification. The method may further include receiving, at the memory system, a second write request for the data structure, wherein the first write request and the second write request have an order, storing, based on the second write request, second data in the data structure, and determining, based on the read request, based on the order, the first data, wherein the reading may be further based on the determining.

## Description

### TECHNICAL FIELD

This disclosure relates generally to accessing data, and more specifically to systems, methods, and devices for ordered access of data in block modified memory.

### BACKGROUND

Data processing applications may use buffers to store raw data before it is processed and/or to store intermediate data between different processing operations. Data may be stored in a buffer that may include, for example, volatile memory such as dynamic random access memory (DRAM), nonvolatile memory such as flash memory, and/or the like.

The above information disclosed in this Background section is only for enhancement of understanding of the background of the inventive principles and therefore it may contain information that does not constitute prior art.

### SUMMARY

Embodiments of the invention are defined in the appended claims. A method may include receiving, at a memory system, a write request for a data structure, wherein the memory system may include a memory having a block modification characteristic, and the data structure may be arranged in the memory, and the method may further include storing, based on the write request, data in the data structure, receiving, at the memory system, a read request for the data structure, reading, based on the read request, the data from the data structure, and indicating, based on the reading, the data for modification. The write request may be a first write request, the data may be first data, and the method may further include receiving, at the memory system, a second write request for the data structure, wherein the first write request and the second write request have an order, storing, based on the second write request, second data in the data structure, and determining, based on the read request, based on the order, the first data, wherein the reading may be further based on the determining. The data structure may be stored in one or more logically consecutive blocks of the memory. The one or more logically consecutive blocks of the memory may include a linked list. The data structure may include a first-in-first-out (FIFO) structure. The data structure may be a first data structure, the read request may be a first read request, the first data structure may be stored in a block of the memory, and the method may further include storing at least a portion of a second data structure in the block of the memory, receiving, at the memory system, a second read request for the second data structure, reading, based on the second read request, third data from the second data structure, and indicating, based on the reading the third data, the third data for modification. The method may further include fetching, based on the order, the first data, and storing the first data in a buffer. The method may further include modifying, based on the indicating, a block of the memory. The method may further include accessing, by the memory system, the data structure using a tail pointer. The method may further include updating, based on the storing the first data, the tail pointer. The method may further include accessing, by the memory system, the data structure using a head pointer. The method may further include updating, based on the reading the first data, the head pointer. The tail pointer may include a physical address. The method may further include returning, based on the reading, the data from the memory system.

A system may include a memory system including a memory having a block modification characteristic, a data producer, and a data consumer, wherein the data producer may be configured to send, to the memory system, a write request for a data structure in the memory, and the data consumer may be configured send, to the memory system, a read request for the data structure, and wherein the memory system may be configured to store, based on the write request, data in the data structure, perform a read operation, based on the read request, of the data, and indicate, based on the read operation, the data for modification. The write request may be a first write request, the data may be first data, the data producer may be further configured to send, to the memory system, a second write request for the data structure, wherein the first write request and the second write request have an order, and the memory system may be further configured to store, based on the second write request, second data in the data structure, and perform a determination, based on the read request, based on the order, of the first data, and the read operation may be further based on the determination. The memory system may be further configured to fetch, based on the order, the first data, and store the first data in a buffer. The memory system may be further configured to store, in one or more logically consecutive blocks of the memory, the data structure. The at least one host may be further configured to send, to the memory system, a command, and the memory system may be further configured to create, based on the command, the data structure.

A storage device may include a storage medium, and a controller configured to receive a first write request for a data structure in the storage medium, store, based on the first write request, first data in the data structure, receive a second write request for the data structure, wherein the first write request and the second write request have an order, store, based on the second write request, second data in the data structure, receive a read request for the data structure, perform a determination, based on the read request, based on the order, of the first data. The controller may be further configured to perform a read operation, based on the determination, of the first data from the data structure, and return, based on the read operation, the first data from the storage device. The storage medium may have a block modification characteristic, and the controller may be further configured to provide an indication, based on the read operation, of the first data for modification. The controller may be further configured to modify, based on the indication, a block of the storage medium. The controller may be further configured to store, in one or more logically consecutive blocks of the storage medium, the data structure. The one or more logically consecutive blocks of the storage medium may include a linked list. The data structure may include a first-in-first-out (FIFO) structure. The controller may be further configured to receive a command, and create, based on the command, the data structure. The controller may be further configured to receive a command, and perform, based on the command, a modification of the data structure. The modification may include changing a capacity of the data structure. The controller may be further configured to receive a command, and return, based on the command, information about the data structure. The controller may be further configured to receive a command, and return, based on the command, information about the storage device.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a memory system having a data structure with ordered access in accordance with example embodiments of the disclosure.
Fig. 2 illustrates an embodiment of a method for accessing memory having a block modification characteristic in accordance with example embodiments of the disclosure.
Fig. 3 illustrates an embodiment of an architecture for a controller for a storage device in accordance with example embodiments of the disclosure.
Fig. 4 illustrates an example embodiment of a storage device with ordered access of data in block modified memory in accordance with example embodiments of the disclosure.
Fig. 5 illustrates an embodiment of a method for accessing an ordered access data structure in accordance with example embodiments of the disclosure.
Fig. 6 illustrates an example embodiment of a logical data layout for an ordered data structure in accordance with example embodiments of the disclosure.
Fig. 7 illustrates an embodiment of a physical block linked list for an ordered access data structure in accordance with example embodiments of the disclosure.
Fig. 8 illustrates another embodiment of an ordered access data structure in accordance with example embodiments of the disclosure.
Fig. 9 illustrates an embodiment of a data pre-fetching scheme for an ordered access data structure in accordance with example embodiments of the disclosure.
Fig. 10 illustrates an embodiment of a storage device architecture with ordered access data structures in block modified memory in accordance with example embodiments of the disclosure.
Fig. 11 illustrates an embodiment of a method for a command flow for creating a buffer in accordance with example embodiments of the disclosure.
Fig. 12 illustrates an embodiment of a method for a command flow for deleting a buffer in accordance with example embodiments of the disclosure.
Fig. 13 illustrates an embodiment of a method for a command flow for writing data to a buffer in accordance with example embodiments of the disclosure.
Fig. 14 illustrates an embodiment of a method for a command flow for reading data from a buffer in accordance with example embodiments of the disclosure.
Fig. 15 illustrates an embodiment of a method for a command flow for pre-reading data from a buffer in accordance with example embodiments of the disclosure.
Fig. 16 illustrates an example embodiment of a host apparatus in accordance with example embodiments of the disclosure.
Fig. 17 illustrates an example embodiment of a storage device in accordance with example embodiments of the disclosure.
Fig. 18 illustrates an embodiment of a method for accessing data in a memory having a block modification characteristic in accordance with example embodiments of the disclosure.

### DETAILED DESCRIPTION

Nonvolatile memory (e.g., flash memory in a solid state drive (SSD)) may be used as a data buffer to store raw data before it is processed and/or to store intermediate data between different processing operations. Depending on the implementation details, however, nonvolatile memory may present one or more challenges associated with the block-erase characteristics of some nonvolatile memories such as garbage collection, write amplification, and/or the like.

In some data processing applications, raw data and/or intermediate data may be stored, retrieved, and/or processed in a sequential order (e.g., a First In First Out (FIFO) order). For example, a first process may generate output data in the same order that it is used as input data by a second process. Moreover, if the data is stored in a buffer between the two processes, the first process may write the data into the buffer in the same order that the second process reads it out from the buffer.

A data storage scheme in accordance with example embodiments of the disclosure may exploit the sequential characteristics of some data processing and/or data transfers. For example, in some embodiments, a storage system may provide storage capacity in the form of one or more data structures having an operating order (e.g., sequential accesses) such as a FIFO buffer. Thus, data may be transferred to a data structure in the storage system in the order in which it is generated by a data source or processing operation. Additionally, or alternatively, data may be transferred (e.g., read) from a data structure in a storage system in the order in which it is consumed by a processing operation. Depending on the implementation details, such a storage scheme may reduce latency, reduce cost, increase efficiency, reduce write amplification, improve data placement, improve garbage collection, improve Quality of Service (QoS), and/or the like.

In some embodiments, a data structure may be implemented using a linked list of nonvolatile memory blocks, wherein a block of data may include a pointer to a next block of data in the list. Depending on the implementation details, this may reduce or eliminate the use of logical-to-physical address translation operations and/or data structures by a storage device or other memory system, a host, application, and/or process that may use the data structure, and/or the like.

In some embodiments that may use nonvolatile memory with a block-erase characteristic as a storage medium, data may be marked for erasure (e.g., invalidated) based on reading the data. For example, in some embodiments, this type of read-based data invalidation may be implemented with a Write Once Read Once (WORO) technique in which data may be marked for erasure as it is read in sequence. Depending on the implementation details, this may improve the efficiency of garbage collection, reduce write amplification, and/or the like, for example, by invalidating data in units of blocks and/or in a predictable manner.

In some embodiments, the predictability of accessing a data structure with an operating order may enable a storage scheme in accordance with example embodiments of the disclosure to implement a prefetch buffer that may prefetch data from a relatively high latency storage medium and place it in a relatively low latency storage medium (e.g., volatile memory). Depending on the implementation details, such a buffering scheme may essentially provide a cache with zero or low miss rate due to the predictable characteristic of sequential data accesses.

This disclosure encompasses numerous inventive principles relating to data storage and/or access. The principles disclosed herein may have independent utility and may be embodied individually, and not every embodiment may utilize every principle. Moreover, the principles may also be embodied in various combinations, some of which may amplify one or more benefits of the individual principles in a synergistic manner.

Data processing applications may use buffers to store raw data generated by one or more sources before it is processed. Buffers may also be used to store intermediate data between different processing operations such as transformations, filtering, translations, and/or the like. Buffers may be implemented with volatile memory such as dynamic random access memory (DRAM) which may provide low latency access. However, when scaling applications to relatively large data sets, volatile may require increasing amounts of power and/or may become prohibitively expensive. Moreover, volatile memory may not retain data, for example, across power cycles, therefore leading to data loss.

Nonvolatile memory such as flash memory may be used to buffer raw data and/or intermediate data. For example, solid state drives (SSDs) that may use not-AND (NAND) flash memory as storage media may be used to implement data buffers to store raw and/or intermediate data (e.g., persistent transit buffers). Depending on the implementation details, nonvolatile memory may reduce the cost and/or power consumption associated with storing data, as well as protecting against data loss.

In some embodiments, however, nonvolatile memory may present one or more potential challenges for use as data buffers. For example, some nonvolatile memory may have a block erase characteristic in which data may be erased in larger units than it may be written (e.g., programmed). Using a nonvolatile memory with a block erase characteristic may involve the use of garbage collection techniques in which valid data that may be stored at various locations throughout a block may be moved to a new location to enable invalid data in the block (e.g., data that has been deleted or otherwise marked as invalid) to be erased by erasing the block. This, in turn, may result in write amplification which may reduce the operating life of a nonvolatile memory that may have a limited number of write cycles.

Another potential challenge associated with the use of nonvolatile memory for data buffers may involve address tracking and/or the use of logical-to-physical address translation operations and/or data structures. For example, a host using an SSD to implement a data buffer may maintain a data structure of logical block addresses (LBAs) at which it has stored data at the SSD. The SSD may implement additional address tracking operations and/or data structures, for example, to perform LBA to physical block address (PBA) translations within the storage device. Some or all of these operations and/or data structures may increase the complexity, latency, cost, power consumption, and/or the like associated with the use of nonvolatile memory for data buffers.

Some of the inventive principles of this disclosure may exploit one or more characteristics of some data processing operations and/or data transfers to implement a data storage scheme that, depending on the implementation details, may address any number of the potential challenges described above. For example, in some data processing applications, raw data and/or intermediate data may be generated and/or written to a buffer in a sequential order (e.g., a FIFO order). Raw data and/or intermediate data may also be read from a buffer and/or consumed by a processing operation in a sequential order (e.g., in the same FIFO order in which the data was generated and/or written). Some embodiments in accordance with the disclosure may exploit this sequential data processing and/or transfer characteristic by providing data storage capacity in the form of one or more data structures having an operating order (e.g., a sequential access order) such as a FIFO buffer. Thus, data may be transferred to a data structure in the storage system in the order in which it is generated by a data source or processing operation. Additionally, or alternatively, data may be transferred (e.g., read) from a data structure in a storage system in the order in which it is consumed by a processing operation.

Some additional inventive principles of this disclosure may involve indicating (e.g., marking) data for modification (e.g., erasure) based on reading the data. For example, in embodiments that may use nonvolatile memory with a block-erase characteristic as a storage medium, data may be marked for erasure (e.g., invalidated) based on reading the data. For example, in some embodiments, this type of read-based data invalidation may be implemented with a Write Once Read Once (WORO) technique in which data may be marked for erasure, for example, as it is read in sequence.

For purposes of illustrating the inventive principles, some embodiments may be described in the context of data storage systems that may include one or more apparatus such as one or more storage devices, storage servers, storage nodes, and/or the like. However, the principles may be applied to any type of memory that may be arranged in one or more data structures having ordered access operations, and/or any type of memory that may have a block modification characteristic such as a block erase characteristic.

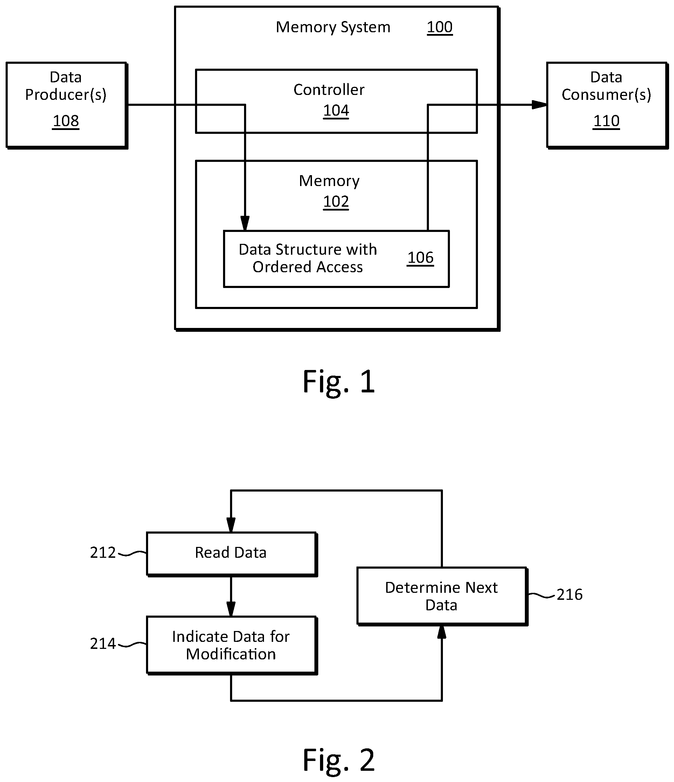

Fig. 1 illustrates an embodiment of a memory system having a data structure with ordered access in accordance with example embodiments of the disclosure. The memory system 100 illustrated in Fig. 1 may include one or more memories 102 and one or more controllers 104. At least a portion of the memory 102 may be arranged as one or more data structures 106 having an ordered access characteristic such as a FIFO characteristic, a block access characteristic, a cache line access characteristic, and/or the like. Data may be written to the data structure 106 by one or more data producers 108 (which may also be referred to as a producer). Data may be read from the data structure 106 by one or more data consumers 110 (which may also be referred to as a consumer).

In some embodiments, a data producer 108 and/or a data consumer 110 may be implemented as one or more hosts, applications, processes, and/or the like, or a combination thereof. In some embodiments and/or situations, a data producer 108 and a data consumer 110 may be partially or entirely the same entity, e.g., a host, an application, a process, and/or the like. Depending on the implementation details, the memory system 100 illustrated in Fig. 1 may reduce latency, reduce cost, increase efficiency, reduce write amplification, improve data placement, improve garbage collection, improve Quality of Service (QoS), and/or the like.

Fig. 2 illustrates an embodiment of a method for accessing memory having a block modification characteristic in accordance with example embodiments of the disclosure. The method illustrated in Fig. 2 may begin at operation 212 where data stored in one or more blocks of memory having a block modification characteristic may be read from the memory. The method may proceed to operation 214 where at least a portion of the data that was read from the memory may be indicated for modification. For example, the data that was read at operation 212 may be invalidated (e.g., marked for erasure, garbage collection, and/or the like) at operation 214. In some embodiments, the method illustrated in Fig. 2 may implement a WORO technique.

The method may proceed to operation 216 which may determine the next data, if any, to be read from the memory. For example, if the data stored in one or more blocks of memory having a block modification characteristic is arranged in a data structure having an ordered access characteristic such as a FIFO, the operation 216 may select the next data to read from the FIFO. In other embodiments, data may be stored according to a random access policy, in which case, operation 216 may determine the next data to be read based on a memory access request from a host or other consumer of data. In some embodiments, the method may terminate after the last data in the one or more blocks of memory have been read and/or indicated for modification. In some embodiments, a block in which all or nearly all of the data has been indicated for modification (e.g., erasure) may be modified (e.g., erased).

Depending on the implementation details, the method illustrated in Fig. 2 may improve the efficiency of garbage collection, reduce write amplification, and/or the like, for example, by invalidating data in units of blocks and/or in a predictable manner.

The embodiments illustrated in Fig. 1 and Fig. 2 have independent utility and may be embodied individually. However, the principles illustrated in Fig. 1 and Fig. 2 may be combined to produce additional embodiments which, depending on the implementation details, may amplify one or more benefits of the individual principles in a synergistic manner. For example, some embodiments may implement a data structure having an ordered access characteristic with memory having a block modification characteristic to provide a WORO-FIFO memory system (e.g., a WORO-FIFO storage device) that may provide storage capacity as a set of one or more FIFOs to one or more data producers and/or consumers as described in more detail below. Depending on the implementation details, such a WORO-FIFO memory system may accommodate a workload that may access raw and/or intermediate data in a sequential manner.

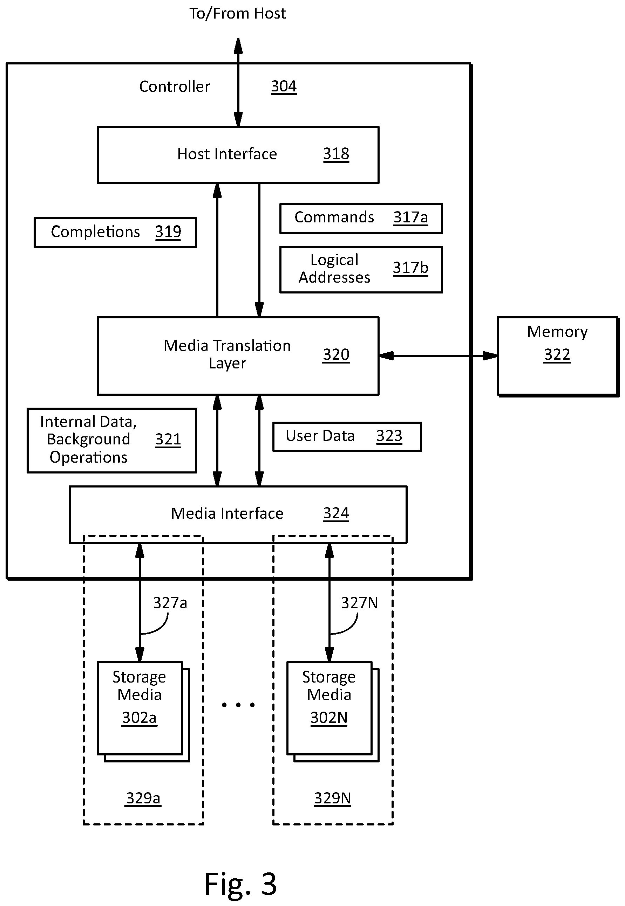

Fig. 3 illustrates an embodiment of an architecture for a controller for a storage device in accordance with example embodiments of the disclosure. The controller 304 illustrated in Fig. 3 may implement, or be used to implement, partially or entirely, any of the embodiments of controllers, memory access schemes, storage devices, and/or the like, disclosed herein. In some embodiments, one or more elements illustrated in Fig. 3 may have a structure and/or function that may be similar to one or more corresponding elements indicated by reference numerals ending in the same digits in other embodiments.

The controller 304 illustrated in Fig. 3 may include a host interface 318, a media translation layer (MTL) 320, a device memory 322, and a media interface 324. In some embodiments, any of the components in the controller 304 may be implemented as separate components (e.g., the device memory 322), and one or more additional components may be integrated into the controller 304 (e.g., an accelerator).

One or more groups of storage media 302a, ..., 302N (which may be referred to collectively as 302) may be connected to the media interface 324 through one or more media buses 327a, ..., 327N (which may be referred to collectively as 327), respectively, to form one or more media channels 329a, ..., 329N (which may be referred to collectively as 329), respectively.

In some embodiments, the controller 304 may be used with storage media 302 that may include solid state media, magnetic media, optical media, and/or the like, or any combination thereof. Examples of solid state media may include flash memory such as NAND flash memory (which may be implemented, for example, with one or more of Single-Level Cell (SLC), MultiLevel Cell (MLC), Triple-Level Cell (TLC), and/or Quad-Level Cell (QLC) configurations or any combination thereof manufactured using any type of process), persistent memory (PMEM) such as cross-gridded nonvolatile memory, memory with bulk resistance change, phase change memory (PCM), and/or the like, or any combination thereof.

In some embodiments, the controller 304 may be used for a storage device that may be implemented in any form factor such as 3.5 inch, 2.5 inch, 1.8 inch, M.2, Enterprise and Data Center SSD Form Factor (EDSFF), NF1, and/or the like, using any connector configuration such as Serial ATA (SATA), Small Computer System Interface (SCSI), Serial Attached SCSI (SAS), M.2, U.2, U.3 and/or the like. In some embodiments, the controller 304 may be used for a storage device, storage server, storage node, and/or the like that may be implemented entirely or partially with, and/or used in connection with, a server chassis, server rack, dataroom, datacenter, edge datacenter, mobile edge datacenter, and/or any combination thereof.

In some embodiments, the controller 304 and/or host interface 318 may communicate using any type of interconnect media and/or interface, network media and/or interface, storage interface, and/or any protocols therefor, such as Peripheral Component Interconnect Express (PCIe), Nonvolatile Memory Express (NVMe), NVMe-over-fabric (NVMe-oF), NVMe Key-Value (NVMe-KV), SATA, SCSI, Ethernet, Transmission Control Protocol/Internet Protocol (TCP/IP), direct memory access (DMA), remote DMA (RDMA), RDMA over Converged Ethernet (ROCE), FibreChannel, InfiniBand, iWARP, and/or the like, or any combination thereof.

In some embodiments, the controller 304 and/or host interface 318 may implement a coherent (e.g., memory coherent, cache coherent, and/or the like) interface and/or memory semantic interface such as Compute Express Link (CXL), and/or a coherent protocol such as CXL.mem, CXL.cache, and/or CXL.IO. Other examples of coherent and/or memory semantic interfaces and/or protocols may include Gen-Z, Coherent Accelerator Processor Interface (CAPI), Cache Coherent Interconnect for Accelerators (CCIX), and/or the like.

In some embodiments, any of the functionality disclosed herein, including any of the functionality and/or components illustrated in Fig. 3 such as the controller 304, host interface 318, media translation layer (MTL) 320, and/or media interface 324 may be implemented with hardware, software or a combination thereof including combinational logic, sequential logic, one or more timers, counters, registers, and/or state machines, one or more complex programmable logic devices (CPLDs), field programmable gate arrays (FPGAs), application specific integrated circuits (ASICs), processing units (which may be referred to as processors), for example, microcontrollers, central processing units (CPUs) such as complex instruction set computer (CISC) processors such as x86 processors and/or reduced instruction set computer (RISC) processors such as RISC-V processors and/or ARM processors, graphics processing units (GPUs), neural processing units (NPUs), tensor processing units (TPUs) and/or the like, executing instructions stored in any type of memory, or any combination thereof. In some embodiments, one or more components may be implemented as a system-on-chip (SOC).

Referring again to Fig. 3, in some embodiments, the controller 304 may generally manage and/or provide access to the storage media 302 by one or more hosts, applications, processes, and/or other data producers and/or consumers, through the host interface 318, for example, by receiving memory access commands 317a and/or logical addresses 317b, and by sending completions 319 through the host interface 318. In some embodiments, the commands 317a and/or responses 319 may be accompanied by corresponding data, while in other embodiments, the corresponding data may be transmitted, for example, using DMA, RDMA, and/or the like. In some embodiments, data write and/or read input and/or output (IO or I/O) commands, as well as various media management commands such as Identify, Set feature, Get Log, and/or the like may be issued over host interface 318, as well as performing user data transfers to and/or from one or more data producers and/or consumers (e.g., a storage Server host system memory).

In some embodiments, the media translation layer 320 may receive memory access commands and/or logical addresses (e.g., LBAs) and translate logical addresses to physical addresses (e.g., PBAs) to the media interface 324 to access the storage media 302. Thus, in some embodiments, internal data and/or information for background operations 321 as well as user data 323 may pass between the media translation layer 320 and media interface 324. In some embodiments, the media translation layer 320 may use the device memory 322 (e.g., DRAM) for various purposes such as storing an address translation table for logical-to-physical address translation (e.g., LBA-to-PBA translation). In some embodiments, the media interface 324 may access the storage media 302 using any mapping of user data to the storage media 302.

For example, in some embodiments, a host may send a write command providing data, and a corresponding LBA at which to store the data, to the controller 304. The host may keep track of the LBAs for data it has sent to the controller 304. The media translation layer 320 may translate the LBAs sent by the host to corresponding PBAs in the storage media 302. When the host reads data, it may send a read command providing the associated LBAs to the controller 304 to obtain the data of interest. The controller 304 may then translate the LBAs received from the host to the PBAs of the storage media 302 to retrieve the data. Thus, depending on the implementation details, the host (or other data producer) may maintain a data structure (e.g., a table of LBAs) to track the logical locations of data it has stored, and the media translation layer 320 may maintain a data structure (e.g., an LBA-to-PBA translation table) to track the physical locations of data it has stored.

Although the controller 304 illustrated in Fig. 3 is not limited to any specific implementation details, in some embodiments, it may be used to implement an SSD that may use flash memory (e.g., one or more NAND flash memory dies) for some or all of the storage media 302. In such an embodiment, the media translation layer 320 may be implemented with a flash translation layer (FTL), and the media interface 324 may be implemented with a flash interface. In some embodiments, an FTL may provide a mapping between logical addresses used by a host (e.g., a storage server) and actual physical locations of data in flash memory used in the storage media 302.

In some embodiments, some storage media 302 (e.g., nonvolatile memory such as NAND flash memory) may be read or written at the granularity of a page (e.g., NAND flash memory having a page size of, for example, 8KB to 16KB), and a page of storage media may be erased before reprogramming it with new data. However, in some embodiments, some storage media may have a block erase characteristic in which the erase granularity may be a block of multiple pages (e.g., 128 to 256 pages in a block). Embodiments in which the granularity of erase and program may be different may involve additional work to migrate one or more pages of valid data (which may be located throughout a first block) to a second block before erasing the first block.

In some embodiments, a garbage collection (GC) process may be used to free up partially filled blocks of data to make room for more data. For example, random writes of data pages to a block may prompt the media translation layer 320 (e.g., an FTL) to implement a garbage collection process to reclaim space from fragmented storage media blocks that have been overwritten. In some embodiments, when garbage collection is completed, one or more pages in an erased block may be recycled and/or add to a list of free pages maintained by the media translation layer.

Some types of storage media 302 (e.g., nonvolatile memory such as NAND flash) may only be programmed and/or erased a limited number of times. This may be referred to as the maximum number of program and/or erase cycles (P and/or E cycles) the memory may sustain over the life of the storage media. However, in some embodiments, and in some situations, reprogramming (e.g., writing) a relatively small amount of data received from a host may involve erasing and/or rewriting a larger amount of data. For example, making room to write a relatively small amount of data received from a host may involve relocating existing data from a first memory block by writing it to a second memory block to erase the first memory block. However, relocating unchanged data may increase the write amplification and/or reduce the life of the storage media.

In some embodiments, write amplification may be expressed in terms of a write amplification factor (WAF) and may be measured, for example, by the ratio of writes committed to the storage 302 media to the writes received from the host system. Increasing write amplification may reduce storage media lifetime, for example, by using excess program and/or erase cycles. In some embodiments, if data that will be invalidated at or around the same time are placed relatively close together (e.g., in the same page, block, and/or the like), it may help reduce garbage collection overhead and/or avoid write amplification. However, depending on the implementation details, the media translation layer 320 may not have access to application level information that may enable it to make this type of data placement decisions. Moreover, a host, application, process, and/or other data producer may have little or no control over how the media translation layer 320 arranges data in the storage media 302.

In some embodiments, the media translation layer 320 may control various background operations such as garbage collection. Thus, operations relating to IO commands (e.g., from a host) may co-exist with background operations, and these two types of storage media accesses may compete with each other for storage media bandwidth, thereby negatively affecting the IO performance of the controller 304. For example, the overhead associated with channel and/or bus accesses and/or performing additional program and/or erase cycles associated with background operations such as garbage collection may consume storage media bandwidth that may otherwise be used for IO read and/or write operations (e.g., by hosts, applications, processes, and/or other data producers and/or consumers. Thus, improving or optimizing garbage collection may improve the efficiency of a storage device, leave more bandwidth for write and read operations, as well as improve the reliability and/or endurance of the storage media 302.

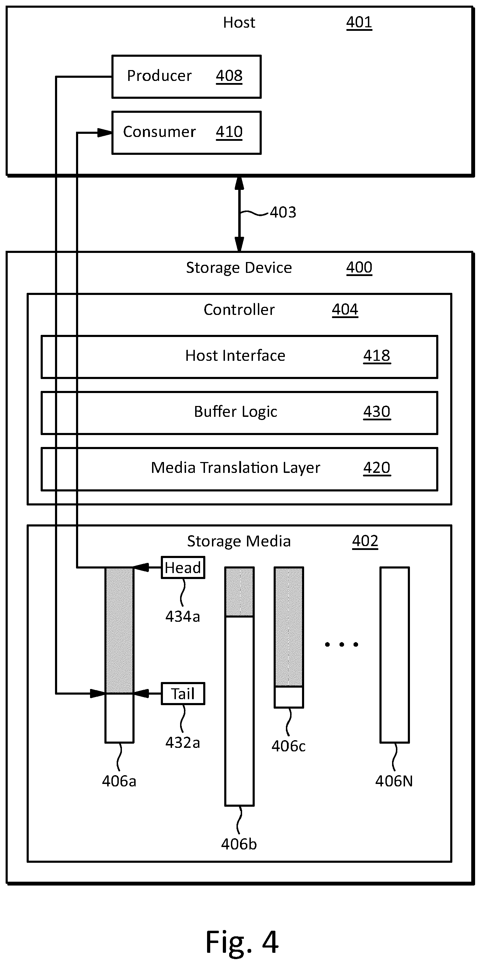

Fig. 4 illustrates an example embodiment of a storage device with ordered access of data in block modified memory in accordance with example embodiments of the disclosure. The storage device 400 illustrated in Fig. 4 may implement, for example, a WORO-FIFO data access scheme. The storage device 400 may implement, or be used to implement, partially or entirely, any of the embodiments of controllers, memory access schemes, storage devices, and/or the like, disclosed herein. In some embodiments, one or more elements illustrated in Fig. 4 may have a structure and/or function that may be similar to one or more corresponding elements indicated by reference numerals ending in the same digits in other embodiments.

The storage device 400 illustrated in Fig. 4 may include a controller 404 and one or more storage media 402. The controller 404 may include a host interface 418, a media translation layer 420, and/or buffer logic 430. In some embodiments, the controller 404 may include a media interface layer, a device memory, and/or other components to implement a storage device.

The host interface 418 may be implemented with any type of interconnect and/or network transmission media, interface, and/or protocols, for example, NVMe over PCIe or network fabric. The one or more storage media 402 may be implemented with any type or types of storage media, for example, memory with a block modification (e.g., block erase) characteristic such as NAND flash memory. The media translation layer 420 may be implemented with any type of translation layer corresponding to the one or more types of storage media 402, for example, a flash translation layer corresponding to NAND flash memory in the one or more storage media 402.

In some embodiments, the buffer logic 430 may be configured to implement one or more ordered access data structures which, in this example, may be WORO-FIFO buffers 406a, ..., 406N. In some embodiments, the buffer logic 430 may be configured to implement an indication scheme that may indicate (e.g., mark) data for modification (e.g., erasure) based on reading the data, for example, a WORO data invalidation scheme.

The storage device 400 illustrated in Fig. 4 may provide storage capacity, for example, in the form of WORO-FIFO buffers 406a, ..., 406N (which may be referred to collectively as 406) to one or more producers 408 and/or consumers 410 at a host 401. For purposes of illustration, only one producer 408 and one consumer 410 which may be part of host 401 are shown in the example embodiment illustrated in Fig. 4, but any number of producers, consumers, hosts, applications, processes, and/or the like, arranged in any configuration may access the storage device 400. In some embodiments, the host 401 may be connected to the storage device 400 through a connection 403 (e.g., using the host interface 418) that may be implemented with any type of interconnect, network, and/or the like.

In some embodiments, the producer 408 may write data, for example, to the WORO-FIFO buffer 406a at a tail location indicated by a tail pointer 432a which may point to the next available memory location of the WORO-FIFO buffer 406a. The process of writing to the tail of the WORO-FIFO buffer 406a may be referred to as pushing data or a push operation and may involve the buffer logic 430 and/or media translation layer 420 writing data provided by the producer 408 at the currently available location pointed to by the tail pointer 432a, and modifying the tail pointer 432a to point to the next available memory location after the data is written to the WORO-FIFO buffer 406a.

As a further example, in some embodiments, the consumer 410 may read data from the WORO-FIFO buffer 406a at a head location indicated by a head pointer 434a which may point to the oldest memory entry (e.g., the First In memory entry) in the WORO-FIFO buffer 406a. The process of reading from the head of the WORO-FIFO buffer 406a may be referred to as popping data or a pop operation and may involve the buffer logic 430 and/or media translation layer 420 reading the data entry at the location currently pointed to by the head pointer 434a, sending the data to the consumer 410, and modifying the head pointer 434a to point to the next oldest memory entry after the previous oldest memory entry is read from the WORO-FI FO buffer 406a.

In some embodiments, the buffer logic 430 may maintain the First In First Out order of one or more of the WORO-FIFO buffers 406a, ..., 406N, for example, by maintaining a tail pointer 432a, ..., 432N and/or a head pointer 434a, ..., 434N for each of the WORO-FIFO buffers 406a, ..., 406N, respectively. Thus, pushing and/or popping data to and/or from one of the WORO-FIFO buffers 406a, ..., 406N may only involve the host 401 sending a push and/or pop command with an identifier for the specific buffer. Depending on the implementation details, the host 401 may not track one or more block addresses of the data in the buffer, and therefore, may eliminate a data structure for tracking block addresses (e.g., LBAs). Moreover, reducing or eliminating the tracking of block addresses may reduce complexity and/or simplify LBA management for the host 401. In some embodiments, the controller 404 and/or buffer logic 430 may implement the WORO-FIFO buffers 406 using one or more commands (e.g., one or more NVMe commands).

In some embodiments, the buffer logic 430 may implement a WORO technique, for example, by indicating data for modification (e.g., invalidating the data by marking it for erasure) as it is read from one or more of the buffers 406. Depending on the implementation details, this may improve or optimize garbage collection for the one or more buffers 406. For example, if one or more of the buffers 406 are implemented with storage media 402 having a block erase characteristic, and the buffers 406 are arranged in blocks (e.g., in whole blocks, or in the case of buffers or portions of buffers 406 that may be smaller than a block, entirely within a block), entire blocks may be invalidated (e.g., indicated for erasure) as data is read sequentially in FIFO order from individual blocks, thereby reducing or eliminating the need to move valid data that may be located (e.g., randomly scattered) among invalid data out of a block to erase the block.

Thus, in some embodiments, and depending on the implementation details, the storage device 400 may exploit the sequential access characteristics of some workloads to improve or optimize the management of storage media 402 (e.g., flash memory) and/or one or more functions of media translation layer 420 (e.g., an FTL) as data is sequentially written to storage media 402 and/or sequentially read from the storage media 402. For example, data may be placed efficiently or optimally in consecutive pages and/or in the same block of storage media to reduce or minimize Write Amplification Factor (WAF), improve storage media endurance, reduce power consumption, and/or the like. As another example, the media translation layer 420 may implement more coarse-grained address translation (e.g., head and/or tail pointers rather than LBA-to-PBA translation) which may reduce the complexity, cost, power consumption, and/or the like, of the media translation layer 420. As a further example, the media translation layer 420 may use less device memory (e.g., DRAM) to track WORO-FIFO buffers and pointers as compared to LBA-to-PBA tables, thereby reducing the amount, cost, power consumption, and/or the like, of device memory. As yet another example, a WORO-FIFO buffer scheme in accordance with example embodiments of the disclosure may reduce the amount of storage media that may be used for overprovisioning, thereby reducing the cost and/or increasing the usable capacity of the storage device 400. Moreover, in some embodiments, and depending on the implementation details, one or more media translation layer processes including garbage collection, recycling, and/or the like may be improved (e.g., fine-tuned) to take advantage of a workload with sequential data processing and/or transfer characteristics.

In some embodiments, the storage device 400 may be implemented with only a FIFO host interface as described above. In other embodiments, however, the storage device 400 may be implemented with a hybrid and/or configurable interface that may accommodate both FIFO and block data access, e.g., simultaneously, based on a mode switching mechanism, and/or the like.

In some embodiments, the buffer logic 430 may be implemented with hardware, software, or any combination thereof, including combinational logic, sequential logic, one or more timers, counters, registers, state machines, volatile memories such as DRAM and/or SRAM, nonvolatile memories such as flash memory, CPLDs, FPGAs, ASICs, and/or processors executing instructions stored in any type of memory, and/or the like, or any combination thereof.

Table 1 illustrates an example embodiment of a command set and corresponding parameters that may be used, for example, by a host, a storage device, and/or the like, to implement a scheme for accessing one or more ordered access data structures (e.g., WORO-FIFO buffers) in accordance with example embodiments of the disclosure. For example, in some embodiments, one or more hosts, applications, processes, and/or other producers and/or consumers, and/or the like, may use one or more of the commands described in Table 1 to create, configure, manage, and/or the like, FIFO buffers in a storage device or other memory system. Although the commands illustrated in Table 1 are not limited to any specific implementation details, in some embodiments one or more of the commands may be implemented as NVMe commands.

**Table 1**

| Command | Parameters |
|---|---|
| Identify | Maximum Number of Buffers Supported |
| | Maximum Capacity Available for Buffers |
| | Granularity of Capacity |
| Create Buffer | Buffer ID |
| | Capacity |
| Delete Buffer | Buffer ID |
| Set Feature | Buffer ID |
| | Change Capacity |
| | Reset Pointers |
| Get Feature | Buffer ID |
| | Current Data Occupancy |
| | Current Free Space |

| | Current Number of Active Buffers |
|---|---|
| Push | Buffer ID |
| | Data Size |
| | Source Address |
| Pop | Buffer ID |
| | Data Size |
| | Destination Address |
| | Move_Discard |

Referring to Table 1, the Identify command may be used to discover one or more features provided by a storage device or other memory system which may return one or more of the following parameters. The parameter Maximum Number of Buffers Supported may indicate how many WORO-FIFO buffers or other ordered access data structures may be supported by the storage device or other memory system. The parameter Maximum Capacity Available for Buffers may indicate, for example, a total amount of memory space available for all data structures expressed, for example, in bytes, double words, pages, blocks, and/or the like. The parameter Granularity of Capacity may indicate a granularity of the available memory space expressed, for example, in bytes, double words, pages, bocks, and/or the like. In some embodiments, one or more of the parameters returned in response to the Identify command may be returned in the form of an Identify data structure.

The Create Buffer command may be used to create a WORO-FIFO buffer or other ordered access data structure. For example, in some embodiments, host system software such as a storage device driver may use the Create Buffer command to create one or more data FIFOs. The driver may specify the parameter Buffer ID that may be used to identify the newly created buffer. The driver may also specify the parameter Buffer Capacity to indicate the amount of storage capacity to be allocated to the newly created buffer. The capacity may be expressed, for example, in the same units as Granularity of Capacity returned in response to the Identify command. In some embodiments, a device driver may use the parameter Maximum Capacity Available for Buffers returned in response to the Identify command to understand how much capacity is available for creating buffers.

The Delete Buffer command may be used to remove an existing WORO-FIFO buffer or other ordered access data structure indicated by the parameter Buffer ID. In some embodiments, upon deletion of a buffer, the capacity of the deleted buffer may be added to the parameter Maximum Capacity Available for Buffers returned in response to the Identify command.

The Set Feature command may be used to change the allocated storage capacity of an existing WORO-FIFO buffer or other ordered access data structure indicated by the parameter Buffer ID. The parameter Change Capacity may indicate how much capacity is to be added to or subtracted from (e.g., in units indicated by the parameter Granularity of Capacity returned in response to the Identify command) the current capacity of the exiting buffer. In some embodiments, the amount of capacity added to, or removed from, an existing buffer may be subtracted from, or added to, the parameter Maximum Capacity Available for Buffers returned in response to the Identify command. The parameter Reset Pointers may be a Boolean value indicating whether the existing head pointer and/or tail pointer are to be reset (e.g., discarding the current contents of the buffer to leave the buffer empty) or left unchanged (e.g., maintaining the current contents of the buffer).

The Get Feature command may be used to obtain various run time information related to an existing WORO-FIFO buffer or other ordered access data structure indicated by the parameter Buffer ID. The parameter Current Data Occupancy may return the current buffer depth or data occupancy of the buffer, whereas the parameter may return the current free space of the buffer. In some embodiments, the parameter Current Number of Active Buffers may also return the number of WORO-FIFO buffers and/or other ordered access data structures that are currently active.

The Push command may be used, for example, at run time, to write data into a specific WORO-FIFO buffer or other ordered access data structure indicated by the parameter Buffer ID. The parameter Data Size may indicate the amount of data to be written (e.g., in units of bytes, double words, pages, blocks, Granularity of Capacity, and/or the like). The parameter Source Address may indicate the start address of the data to be transferred, for example, in host memory. In some embodiments, the data may be transferred (e.g., by a storage device controller) from host memory using DMA, RDMA, and/or the like, to the WORO-FIFO buffer or other ordered access data structure indicated by the parameter Buffer ID. In some embodiments, the parameter Source Address may include a single contiguous address, a set of addresses, a linked list, and/or the like.

The Pop command may be used, for example, at run time, to read data from a specific WORO-FIFO buffer or other ordered access data structure indicated by the parameter Buffer ID. The parameter Data Size may indicate the amount of data to be read (e.g., in units of bytes, double words, pages, blocks, Granularity of Capacity, and/or the like). The parameter Destination Address may indicate the start address of the location to which the data may be transferred, for example, in host memory. In some embodiments, the data may be transferred (e.g., by a storage device controller) from the WORO-FIFO buffer or other ordered access data structure indicated by the parameter Buffer ID to host memory using DMA, RDMA, and/or the like. In some embodiments, the parameter Destination Address may include a single contiguous address, a set of addresses, a linked list, and/or the like. In some embodiments, the parameter Move_Discard may be a Boolean value indicating whether the data may be moved to the host memory location indicated by the parameter Destination Address or discarded after being read from the buffer indicated by the parameter Buffer ID. For example, in some situations, the host may not use the actual data popped from the buffer, but instead, may only intend to move the head pointer (e.g., read pointer) to the next entry in the buffer.

In some embodiments, a controller and/or media translation layer may maintain one or more dynamic capacity availability statistics for one or more data structures (e.g., WORO-FIFO buffers). For example, a host may query the current consumption of a target buffer using a Get Feature command. The host may use the returned data to reconfigure the buffer ID, buffer capacity, reset the buffer pointers, and/or the like, using a Set Feature command. The controller and/or media translation layer may then update one or more corresponding fields in Table 2 to reflect these changes.

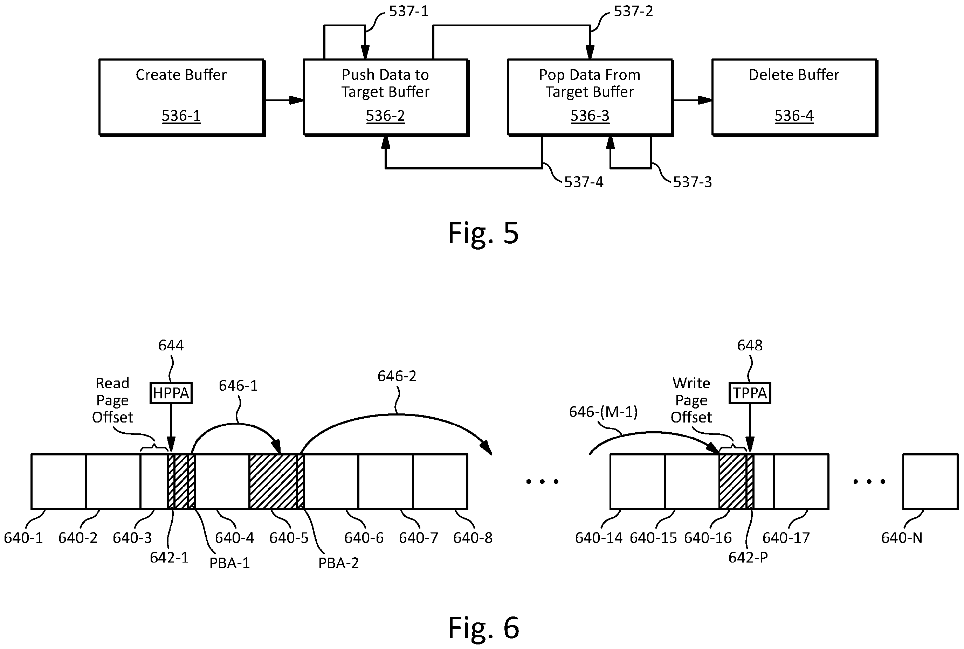

Fig. 5 illustrates an embodiment of a method for accessing an ordered access data structure in accordance with example embodiments of the disclosure. The embodiment illustrated in Fig. 5 may be used, for example, with any of the embodiments described herein, including those illustrated in Fig. 1, Fig. 2, Fig. 3, or Fig. 4. For purposes of illustrating the principles, the embodiment illustrated in Fig. 5 may be described in the context of a host accessing a buffer (e.g., a FIFO buffer), but the principles may be applied to any application, process, and/or any data producers and/or consumers accessing any data structure with an ordered access characteristic.

The method may begin at operation 536-1 at which a host may create a buffer. For example, the host may use a Create Buffer command as described above to create a WORO-FIFO buffer at a storage device using storage media with a block erase characteristic. At operation 536-2, the host may push a first data entry into the buffer, for example, using the Push command as described above. If the host has additional data entries to push into the buffer, it may repeat operation 536-2 as shown by arrow 537-1 until the host has no more data entries to store in the buffer. In some embodiments, the data stored in the buffer may be generated by a first application or process (e.g., running at the host) that may have performed a first processing operation such as a transformation, filtering operation, a translation, and/or the like.

The method may then proceed as shown by arrow 537-2 to operation 536-3 at which the host may pop a data entry from the buffer, for example, using a Pop command as described above. If the host needs additional data entries from the buffer, it may repeat operation 536-3 as shown by arrow 537-3 until the host has retrieved all the data entries it may need. In some embodiments, as each data entry is popped from the buffer, it may be indicated for modification (e.g., invalidated by marking it for erasure and/or garbage collection). In some embodiments, the data popped from the buffer may be used by a second application or process (e.g., running at the host) that may perform a second processing operation (e.g., a transformation, filtering operation, a translation, and/or the like) on the data.

In some embodiments, the host may proceed multiple times between pushing data into the buffer at operation 536-2 (including looping as needed as shown by arrow 537-1 to push multiple data entries into the buffer) and popping data from the buffer at operation 536-3 (including looping as needed as shown by arrow 537-3 to pop multiple data entries from the buffer), each time performing a different processing operation on the data.

If, at operation 536-3, the host no longer needs the buffer for further operations, it may proceed to operation 536-4 where it may delete the buffer, for example, using the Delete Buffer command as described above.

Fig. 6 illustrates an example embodiment of a logical data layout for an ordered data structure in accordance with example embodiments of the disclosure. The embodiment illustrated in Fig. 6 may be used, for example, to implement any of the ordered access data structures (e.g., WORO-FIFOs) disclosed herein, including those illustrated in Fig. 1 and Fig. 4.

Referring to Fig. 6, the data structure may be formed in physical memory blocks 640-1, ..., 640-N which, for purposes of illustration, are shown in sequential order but which may be arranged in any configuration in one or more channels, memory devices, and/or the like, in any storage media.

The data structure may be formed from one or more portions (shown with diagonal shading) of any one or more of the physical memory blocks 640-1, ..., 640-N. In the example illustrated in Fig. 6, a first page 642-1 of the data structure may be located in physical memory block 640-3 at a head pointer physical address (HPPA) pointed to by a head pointer 644. The first page 642-1 may be located, for example, at a read page offset within the physical memory block 640-3. In some embodiments, the HPPA may be referred to as a head pointer.

The data structure, including the first page 642-1 and possibly one or more additional pages may occupy a portion of physical memory block 640-3 shown with diagonal shading. A physical block address PBA-1 of the next physical memory block 640-5 that the data structure may occupy may be stored in the first physical memory block 640-3, for example, at the end or tail of physical memory block 640-3. Thus, the physical block address PBA-1 may point to the next physical memory block 640-5 as shown by arrow 646-1.

In the example illustrated in Fig. 6, the data structure may also occupy all of physical memory block 640-5 as shown by diagonal shading. A physical block address PBA-2 of the next physical memory block that the data structure may occupy may be stored in physical memory block 640-5, for example, at the end or tail of physical memory block 640-5. Thus, the physical block address PBA-2 may point to the next physical memory block as shown by arrow 646-2. (The next physical memory block occupied by the data structure may be located in a region of the physical memory blocks 640-1, ..., 640-N indicated by ellipses, and thus may not be shown explicitly.)

The data structure may occupy any number of additional physical memory blocks 640 up to and including a portion (indicated by diagonal shading) of physical memory block 640-16 which may be pointed to by a physical block address PBA-(M-1) (not shown) stored in a previous occupied physical memory block (not shown) as shown by arrow 646-(M-1), where M may indicate the total number of physical memory blocks 640 that may be at least partially occupied by the data structure. In the example illustrated in Fig. 6, the data structure may end at page 642-P (where P may indicate the total number of pages in the data structure), which may be located at a write page offset within the physical memory block 640-16. In some embodiments, the last page 642-P of the data structure may be located at a tail pointer physical address (TPPA) pointed to by a tail pointer 648. In some embodiments, the TPPA may be referred to as a tail pointer.

Thus, the data structure indicated by diagonal shading may form a linked list in which each physical memory block (except for the last block) may include a physical block address of the next physical memory block.

In some embodiments, data belonging to the same data structure (e.g., the same FIFO buffer) may be stored together. Moreover, if data belonging to the same data structure is not mixed with data from other data structures, it may simplify garbage collection, for example, by invalidating whole blocks of data as the data is read in sequence from a FIFO data structure.

In some embodiments, a device controller and/or media translation layer (e.g., an FTL) may determine the placement of the data of the data structure, for example, within physical memory blocks 640-1, ..., 640-N of the storage media. In some embodiments, a device controller and/or media translation may manage the linked list for one or more data structures (e.g., FIFO buffers). For example, as data blocks are read to or written from a buffer, the head and/or tail pointers may be updated to accommodate the newly read or written data. Head and/or tail pointers may be stored, for example, in an FTL table. In some embodiments, the total size of a data structure may be a multiple of a block size in storage media using memory with a block modification (e.g., erasure) characteristic. In some embodiments, the use of a sequential write and/or read sequence for an ordered access data structure may enable a device controller (e.g., a media translation layer) to manage the data structure by storing only a head pointer and a tail pointer. Depending on the implementation details, this may reduce or eliminate a larger data structure that may be used for logical-to-physical (e.g., LBA-to-PBA) address translation.

Table 2 illustrates some example data for an embodiment of a table that may be used to manage one or more data structures in accordance with example embodiments of the disclosure. Table 2 may be used, for example, by a device controller and/or media translation layer (e.g., an FTL) to manage FIFO buffers (e.g., WORO-FIFO buffers) in a storage device. For purposes of illustration, the embodiment illustrated in Table 2 may assume a page size of 16KB and a block size of 4M, but the principles are not limited to any specific implementation details, and other types of data structures may be used. The table may be stored, for example, in a device memory such as the device memory 322 illustrated in Fig. 3.

**Table 2**

| Buffer ID | Valid | Total Capacity | Current Occupied Space | Current Free space | Head Pointer Physical Address (HPPA) | Tail Pointer Physical Address (TPPA) | Write Page Offset | Read Page Offset |
|---|---|---|---|---|---|---|---|---|
| 0 | Y | 4MB | 960KB | 3136KB | CH0, DEV0, address 0x0000_1200 | CH0, DEV0, address 0x0000_1200 | 64 | 4 |
| 1 | Y | 24MB | 24MB | 0 | CH5, DEV0, address 0x0001_6000 | CH0, DEV0, address 0x0001_6000 | 256 | 0 |
| 6 | Y | 8MB | 0 | 8MB | 0 | 0 | 0 | 0 |
| 14 | Y | 64MB | 32MB | 32MB | CH7, DEV0, address 0x0003_8600 | CH3, DEV0, address 0x0003_8600 | 256 | 256 |
| ... | | | | | | | | |

Referring to Table 2, each row may contain information relating to a buffer identified by the Buffer ID in the first column. The second column may indicate whether the buffer ID is currently valid (e.g., the corresponding buffer has not been deleted). The third, fourth, and fifth columns may indicate the current total capacity, current occupied space, and current free space, respectively, of the buffer indicated by the Buffer ID. The sixth column may include a head pointer physical address (HPPA) for the corresponding buffer which may be expressed, for example, based on a channel, memory device number, and address within the device, for storage media (e.g., flash memory) containing the buffer. The seventh column includes a tail pointer physical address (TPPA) for the corresponding buffer which may also be expressed, for example, based on a channel, memory device number, and address within the device, for storage media (e.g., flash memory) containing the buffer. The eighth column may contain a write page within the block indicated by the TPPA, and the ninth column may contain a read page within the block indicated by the HPPA. In some embodiments, the read page offset may be considered part of the HPPA, and the write page offset may be considered part of the TPPA.

In some embodiments, a storage device controller and/or media translation layer may maintain a data structure such as Table 2 to track buffer locations within storage media in a storage device. A data structure such as Table 2 may enable a storage device controller and/or media translation layer to track PBA information along with page offset values to determine memory locations at which data may be written to (e.g., pushed) and/or read from (e.g., popped) a given buffer. The HPPA, TPPA, write page offset, and/or read page offset for the buffer indicated by Buffer ID 6 may be zero because the buffer may be empty, and thus, no data blocks may have been allocated for the buffer yet.

In some embodiments, the HPPA (which may also be referred to as a head pointer) may indicate the physical block address from where the next data should be read (e.g., to service a Pop command from a host). The read page offset may provide a page number within the block specified by the HPPA from which the data is to be read. When data is read, the read page offset may be updated in Table 2. When the block is completely read out, the HPPA may be updated in Table 2, for example, using a block pointer (e.g., a physical block address such as PBA-1 illustrated in Fig. 6) that may be embedded in the current block and which may point to the next physical memory block in the buffer.

In some embodiments, the TPPA (which may also be referred to as a tail pointer) may indicate the physical block address of the next free memory location where data (e.g., to service a Push command from a host) may be written. The write page offset may provide a page number within the block specified by the TPPA at which the data may be written. When data is written, the write page offset may be updated in Table 2. When the current block specified by the TPPA becomes full, a new free memory block may be allocated (e.g., from anywhere in physical memory space) as the next memory block, and the address of the next block may be embedded in the current block (e.g., in the form of a physical block address such as PBA-1 illustrated in Fig. 5) ). The new block address may also be updated in the corresponding TPPA column of Table 2.

In some embodiments, and depending on the implementation details, a system architecture using data structures with ordered access (e.g., FIFO buffers) in accordance with example embodiments of the disclosure may reduce the amount of memory (e.g., DRAM) used by the system. In a storage device having an FTL that may perform LBA-to-PBA translation, the FTL may maintain a mapping table that may track addresses at the granularity of pages. For example, a storage device having a logical page size of 4KB, and erase block size of 4MB, and a mapping table that may use 4 bytes per logical page may require about 1GB of memory overhead for a mapping table for a 1TB storage device. In contrast, a storage device with the same page, block, and address size, but that implements storage capacity in the form of FIFO buffers in accordance with example embodiments of the disclosure may only use about 1 MB of memory for a table of head and/or tail pointers for a 1TB storage device. Moreover, with a storage device that implements storage capacity in the form of FIFO buffers in accordance with example embodiments of the disclosure, the cost and/or power consumption may be reduced.

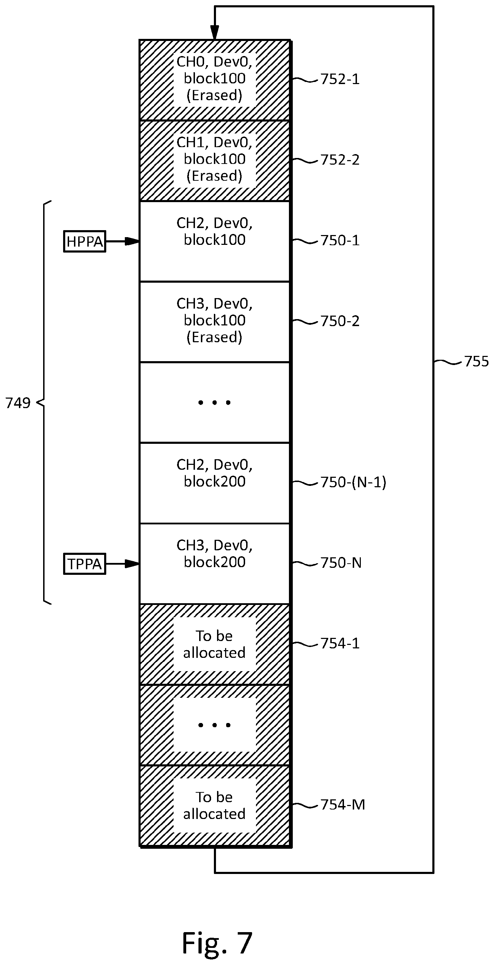

Fig. 7 illustrates an embodiment of a physical block linked list for an ordered access data structure in accordance with example embodiments of the disclosure. The embodiment illustrated in Fig. 7 may implement, for example, a FIFO buffer having an HPPA (e.g., head a pointer) that may provide a physical address for a block of physical memory at the head of the buffer and a TPPA (e.g., a tail pointer) that may provide a physical address for a block of physical memory at the tail of the buffer. The blocks illustrated in Fig. 7 may be shown with their respective physical address, for example, channel number, memory device number, address within the device, and/or the like (e.g., as shown in Table 2).

The actual data structure (e.g., FIFO buffer) 749 may occupy the blocks 750-1, ..., 750-N shown without shading. The data structure may travel generally downward as blocks of data are added to the data structure and/or read from the data structure. Thus, shaded blocks 752-1 and 752-2 above the data structure may have previously been part of the data structure but were erased when data was read (popped) from the data structure. Similarly, shaded blocks 754-1, ..., 754-M may be empty (e.g., previously erased) blocks waiting to be allocated to the data structure. In some embodiments, the physical blocks shown in Fig. 7 may be operated as a circular buffer as shown by arrow 755.

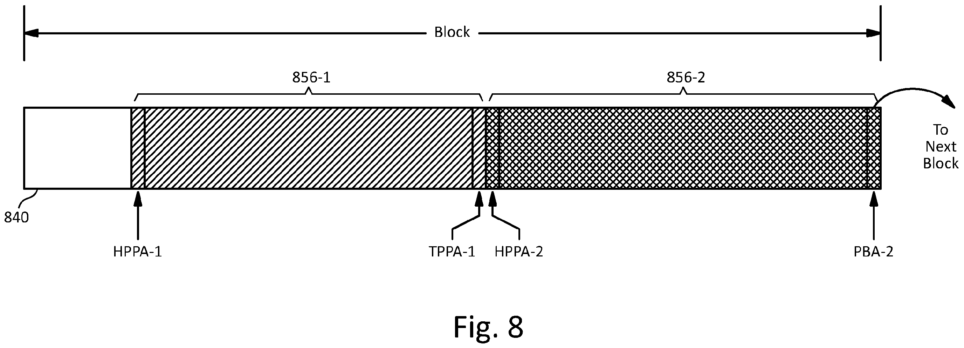

Fig. 8 illustrates another embodiment of an ordered access data structure in accordance with example embodiments of the disclosure. In the embodiment illustrated in Fig. 8, a first ordered access data structure (e.g., a WORO-FIFO buffer) 856-1 may be smaller than the physical memory block 840. The data structure 856-1 may occupy the portion of the physical memory block 840 shown with diagonal shading. The data structure 856-1 may begin at a first page that may be pointed to by a first head pointer HPPA-1. The data structure 856-1 may end at a page that may be pointed to by a first tail pointer TPPA-1. In some embodiments, the head pointer, tail pointer, write page offset, read page offset, and/or other information for managing the data structure 856-1 may be maintained, for example, in a data structure such as Table 2. In this example, because the data structure 856-1 fits within the physical memory block 840, the channel number, memory device number, and/or the like, of the HPPA and TPPA may be the same, but the write page offset and read page offset may be different.

Also illustrated in Fig. 8 is a first portion of a second data structure 856-2 (e.g., a second WORO-FIFO buffer) shown by cross-hatch shading. The second data structure 856-2 may begin at a first page that may be pointed to by a second head pointer HPPA-2. The second data structure 856-2 may include a physical block address PBA-2 of the next physical memory block that the second data structure 856-2 may occupy.

In some embodiments, an ordered access data structure may be implemented with one or more techniques other than linked lists. For example, in some embodiments, a device controller and/or media translation layer may maintain a mapping table of the physical addresses of physical memory blocks allocated an ordered access data structure such as a WORO-FIFO buffer.

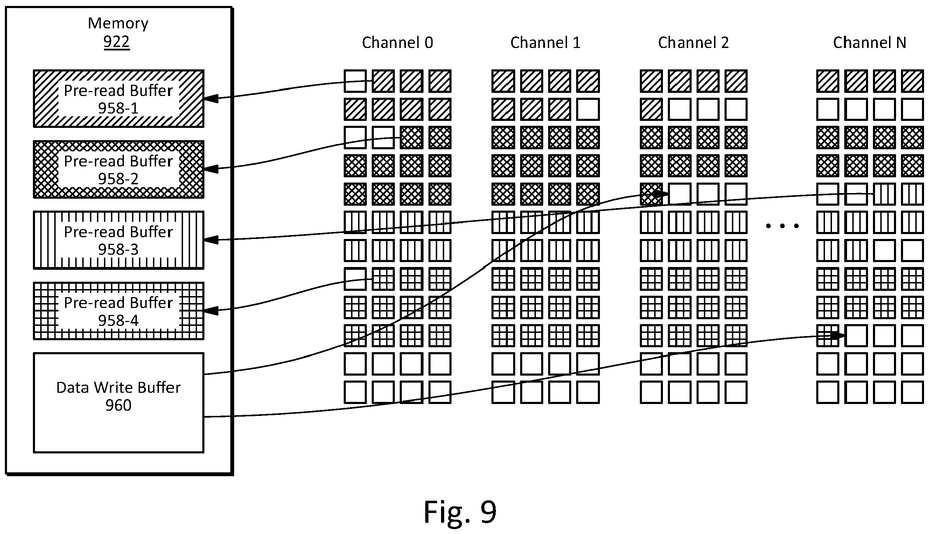

Fig. 9 illustrates an embodiment of a data pre-fetching scheme for an ordered access data structure in accordance with example embodiments of the disclosure. The embodiment illustrated in Fig. 9 may be used, for example, to implement, or may be implemented with, any of the data storage schemes disclosed herein.

In the embodiment illustrated in Fig. 9, the blocks may represent individual physical memory blocks of storage media that may be mapped to channels Channel 1, Channel 2, ..., Channel N. Blocks occupied by the same data structure (e.g., a FIFO or WORO-FIFO buffer) may have the same type of shading.

In some embodiments, data may be read sequentially from one or more data structures, for example from a location indicated by a head pointer of a FIFO. Thus, the location of the next data to be read from the data structure may be predictable. The embodiment illustrated in Fig. 9 may exploit this predictability to pre-load data from one or more ordered access data structures into one or more data caches 958-1, ...958-4 (which may also be referred to as pre-fetch buffers or pre-read buffers) in a memory 922. For example, a device controller and/or media translation layer in a storage device may pre-read data from the head of a first WORO-FIFO buffer indicated by a first type of shading and store it into the first data cache 958-1. Similarly, the device controller and/or media translation layer may pre-read data from the heads of a second through fourth WORO-FIFO buffer indicated by other types of shading, respectively, and store it into the data caches 958-2, 958-3, and 958-4, respectively. In some embodiments, due to the sequential characteristics of a FIFO workload, there may be a relatively high probability of a cache hit on data requested by a host. Depending on the implementation details, the cached data may be a reliable hit. Thus, when a host issues a Pop command for data in one of the data structures, the requested data may be present in one of the data caches 958-1, ...958-4 which may enable it to be transferred directly from the corresponding cache to the host instead of the corresponding storage media (e.g., flash memory). Depending on the implementation details, this may reduce the latency and/or improve the QoS associated with reading data from storage media, for example, in a storage device.

In some embodiments, memory blocks allocated to a specific data structure (e.g., a FIFO or WORO-FIFO buffer) may be striped across different channels as shown in Fig. 9. Depending on the implementation details, striping data for a data structure across channels may enable one or more read operations in one or more channels to overlap with one or more write (e.g., program) operations in one or more other channels, which may thereby increase throughput.

In some embodiments, a write data buffer 960 may also be included, for example, in the memory 922. The write data buffer 960 may be used, for example, to temporarily store data from a host (e.g., for a Push command) while it is written (e.g., programmed) into one or more of the data blocks occupied by a data structure (e.g., a WORO-FIFO buffer specified by a Push command).

In some embodiments that may implement a scheme for indicating data for modification based on reading the data (e.g., a WORO scheme), data may not be accessed again after it has been read. Thus, the data may be indicated for modification (e.g., invalidated by marking it for erasure) as it is read, for example, sequentially in the case of a WORO-FIFO buffer. In some embodiments implemented in a storage device, a device controller and/or media translation layer may trigger garbage collection on a block when all or nearly all of a block has been invalidated.

Depending on the implementation details, because read operations may be performed sequentially on a block, an entire block may be invalidated as a head pointer passes through the block while popping data from the data structure that may occupy the block. Thus, there may be no valid data located (e.g., randomly) throughout a block, and therefore no reason to move valid data to another block to erase the block during garbage collection. Instead, an entire block may be ready for erasure after being read in sequence. This may simplify and/or speed up a garbage collection process compared to the read-erase-modify-write process that may be involved with performing garbage collection on valid data scattered throughout a block. Moreover, by reducing or eliminating the movement of valid data during garbage collection, write amplification may be reduced (in some cases close to 1.) Thus, depending on the implementation details, performance variability caused by background garbage collection operation may be reduced and/or leaves IO bandwidth that would have been used for garbage collection may be used for data I/O (e.g., for host accesses). Moreover, in some embodiments, a scheme for invalidating data based on reading the data in accordance with example embodiments of the disclosure may simplify host operation, for example, by reducing or eliminating Dataset Management Trim commands that the host may send to invalidate data.

As a further potential benefit, a WORO architecture (e.g., for a storage device) may reduce the amount of space used for overprovisioning, which, depending on the implementation details, may reduce cost and/or power consumption and/or may increase system capacity. For example, a storage device without a WORO architecture may reserve a certain percentage (e.g., about seven percent) of usable capacity for garbage collection overhead. However, because garbage collection overhead may be reduced in a system having a WORO architecture in accordance with example embodiments of the disclosure, the reserved capacity for garbage collection overhead may be reduced (e.g., to about one percent), thereby reducing the cost and/or increasing the usable capacity of the storage device.

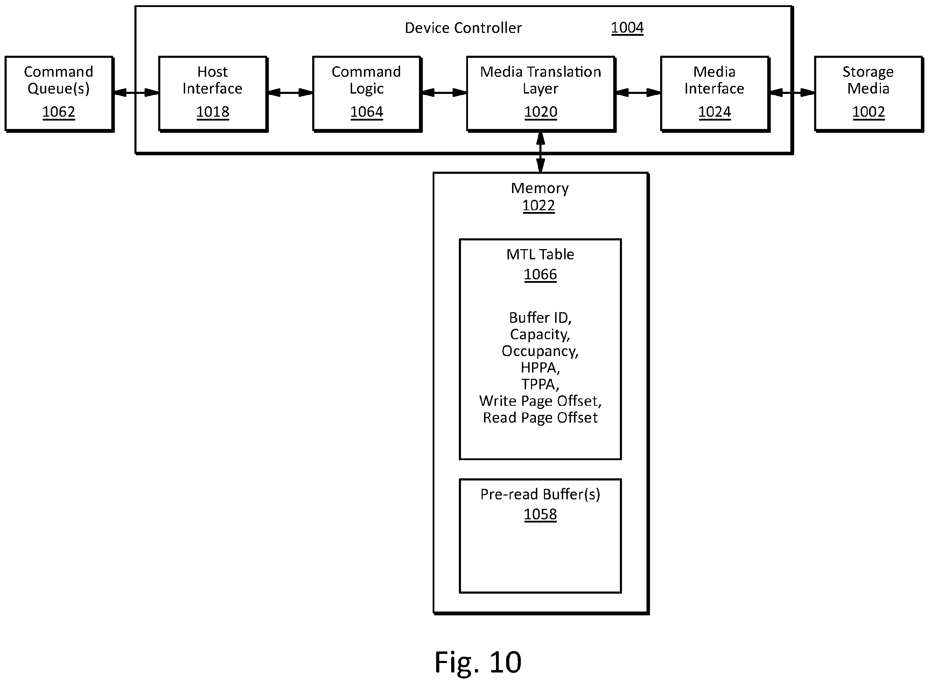

Fig. 10 illustrates an embodiment of a storage device architecture with ordered access data structures in block modified memory in accordance with example embodiments of the disclosure. The embodiment illustrated in Fig. 10 may be used to implement, or may be implemented with, any of the embodiments disclosed herein including those illustrated in Figs. 1 through 9.

Referring to Fig. 10, the architecture may include one or more command queues 1062, a device controller 1004, a device memory 1022, and/or storage media 1002. The device controller 1004 may include a host interface 1018, command logic 1064, a media translation layer 1020, and/or a media interface 1024.

One or more of the components illustrated in Fig. 10 may have a structure and/or function that may be similar to one or more corresponding components illustrated in Fig. 3 and/or Fig. 4 and may be indicated by reference numerals ending in the same digits. For example, the host interface 1018, media translation layer 1020, device memory 1022, media interface 1024, and/or storage media 1002 may be similar to those illustrated in Fig. 3 and/or Fig. 4. However, the device memory 1022 may be used to store a media translation layer (MTL) table 1066 that may be implemented, for example, using a table such as Table 2 as described above. In some embodiments, the device memory 1022 may be used for data caches for prefetching data from the storage media 1002 in a manner similar to the data caches 958-1, ..., 958-4 illustrated in Fig. 9. In some embodiments, the media translation layer 1020 may include logic to implement WORO functionality as described herein. In some embodiments, the device controller 1004 and/or media translation layer 1020 may include logic to implement ordered access data structures (e.g., FIFO buffers) similar to the buffer logic 430 described above with respect to Fig. 4.

Referring to Fig. 10, the one or more command queues 1062 may be implemented, for example, with NVMe submission queues that may be located at a host, at the storage device, or any combination thereof. The command logic 1064 may include functionality (e.g., command parsing and/or execution logic) to implement one or more commands for implementing ordered access data structures (e.g., FIFO and/or WORO-FIFO buffers) in block modified memory (e.g., flash memory) in accordance with example embodiments of the disclosure. For example, the command logic 1064 may include functionality to implement any number of the commands described above with respect to Table 1.

Any of the functionality described with reference to Fig. 10, including the command logic 1064, logic to implement WORO functionality, and/or logic to implement ordered access data structures, may be implemented, for example, with hardware, software, or any combination thereof, including combinational logic, sequential logic, one or more timers, counters, registers, state machines, volatile memories such as DRAM and/or SRAM, nonvolatile memories such as flash memory, CPLDs, FPGAs, ASICs, and/or processors executing instructions stored in any type of memory, and/or the like, or any combination thereof.

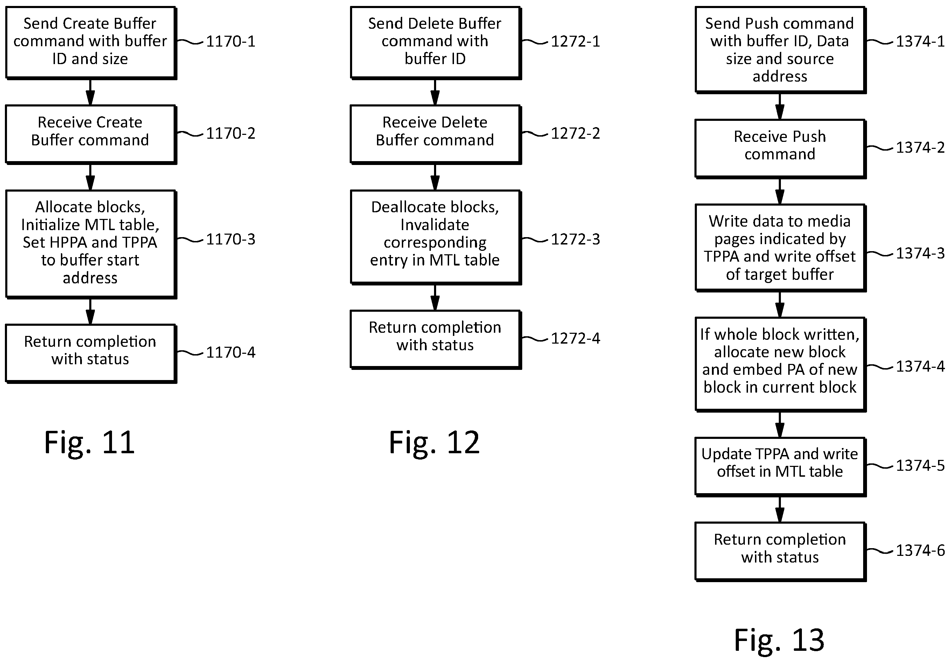

Fig. 11 illustrates an embodiment of a method for a command flow for creating a buffer in accordance with example embodiments of the disclosure. The embodiment illustrated in Fig. 11 may be used, for example, to implement the Create Buffer command described above with respect to Table 1. The method may begin at operation 1170-1 at which a host may send a Create Buffer command to a storage device. The Create Buffer command may include one or more parameters to specify a buffer ID and/or a buffer size. At operation 1170-2, the storage device may receive the Create Buffer command and one or more parameters. At operation 1170-3, a device controller and/or media translation layer at the storage device may execute the Create Buffer command by creating a buffer corresponding to the buffer ID parameter, allocating one or more blocks of storage media to the buffer based on the buffer size parameter, and initializing an HPPA and/or a TPPA to a starting physical block address for the buffer. In some embodiments, the device controller and/or media translation layer may populate an entry (e.g., a row corresponding to the buffer ID) in an MTL table (e.g., a table similar to Table 2) with the buffer ID, buffer size, HPPA, TPPA, write page offset, read page offset, and/or the like for the newly created buffer. At operation 1170-4, the device controller and/or media translation layer may return a completion to the host indicating success or failure of the Create Buffer command.

Fig. 12 illustrates an embodiment of a method for a command flow for deleting a buffer in accordance with example embodiments of the disclosure. The embodiment illustrated in Fig. 12 may be used, for example, to implement the Delete Buffer command described above with respect to Table 1. The method may begin at operation 1272-1 at which a host may send a Delete Buffer command to a storage device. The Delete Buffer command may include one or more parameters to specify a buffer ID. At operation 1272-2, the storage device may receive the Delete Buffer command and one or more parameters. At operation 1272-3, a device controller and/or media translation layer at the storage device may execute the Delete Buffer command by deallocating one or more blocks of storage media from the buffer corresponding to the buffer ID parameter, and/or invalidating an entry (e.g., row) in an MTL table (e.g., a table similar to Table 2) corresponding to the buffer ID. At operation 1272-4, the device controller and/or media translation layer may return a completion to the host indicating success or failure of the Delete Buffer command.

Fig. 13 illustrates an embodiment of a method for a command flow for writing data to a buffer in accordance with example embodiments of the disclosure. The embodiment illustrated in Fig. 13 may be used, for example, to implement the Push command described above with respect to Table 1. The method may begin at operation 1374-1 at which a host may send a Push command to a storage device. The Push command may include one or more parameters to specify a buffer ID, a data transfer size, a data source address in host memory, and/or the like. At operation 1374-2, the storage device may receive the Push command and one or more parameters. At operation 1374-3, a device controller and/or media translation layer at the storage device may begin executing the Push command by writing data corresponding to the Push command (which may be received at the storage device, for example, using DMA, RDMA, and/or the like) to one or more pages of storage media starting at a block indicated by TPPA and/or a write page offset which may be stored, for example, ) in an MTL table (e.g., a table similar to Table 2). At operation 1374-4, if a block is filled while writing the data to the storage media, the device controller and/or media translation layer may allocate a new block to the buffer and embed the physical block address of the new block as a pointer in the previous block (e.g., to form a linked list). At operation 1374-5, the device controller and/or media translation layer may update the TPPA and/or write page offset for the buffer in the MTL table after the write process is completed. At operation 1374-6, the device controller and/or media translation layer may return a completion to the host indicating success or failure of the Push command.

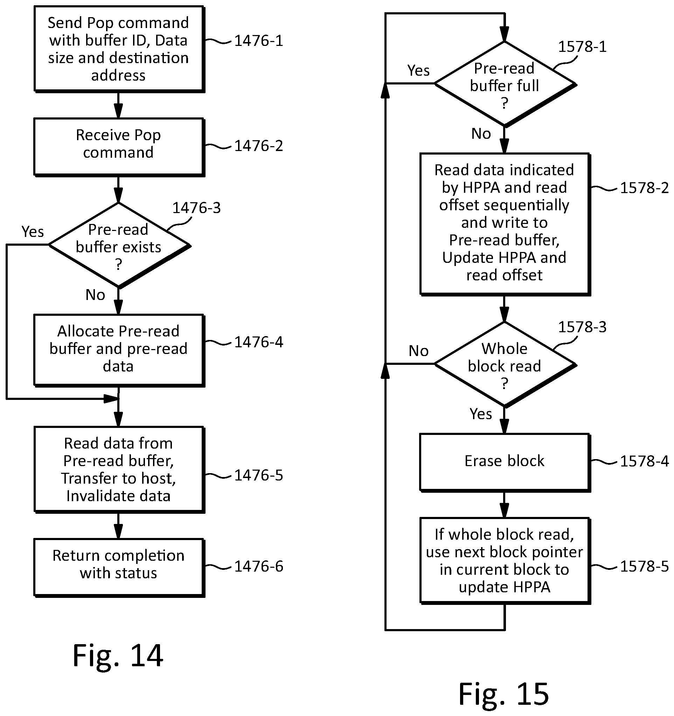

Fig. 14 illustrates an embodiment of a method for a command flow for reading data from a buffer in accordance with example embodiments of the disclosure. The embodiment illustrated in Fig. 14 may be used, for example, to implement the Pop command described above with respect to Table 1. The method may begin at operation 1476-1 at which a host may send a Pop command to a storage device. The Pop command may include one or more parameters to specify a buffer ID, a data transfer size, a data destination address in host memory, and/or the like. At operation 1476-2, the storage device may receive the Pop command and one or more parameters. At operation 1476-3, a device controller and/or media translation layer at the storage device may begin executing the Pop command by determining if a pre-read buffer corresponding to the buffer ID exists. If a corresponding pre-read buffer exists, the method may proceed to operation 1476-5.

If, however, a corresponding pre-read buffer does not exist, the device controller and/or media translation layer may allocate a pre-read buffer for the buffer ID at operation 1476-4. The device controller and/or media translation layer may then perform a data pre-load operation, for example, as illustrated in Fig. 15 to read the requested data from the buffer and store it in the pre-read buffer. The method may then proceed to operation 1476-5.

At operation 1476-5, the device controller and/or media translation layer may read the requested data from the pre-read buffer and transfer the data to the host, for example, using DMA, RDMA, and/or the like. In some embodiments, the device controller and/or media translation layer may invalidate the data in the pre-read buffer after reading it from the pre-read buffer. At operation 1476-6, the device controller and/or media translation layer may return a completion to the host indicating success or failure of the Pop command.

Fig. 15 illustrates an embodiment of a method for a command flow for pre-reading data from a buffer in accordance with example embodiments of the disclosure. The embodiment illustrated in Fig. 15 may be used, for example, to implement the data pre-load operation used at operation 1476-4 in Fig. 14.

Referring to Fig. 15, the method may begin at operation 1578-1 where a device controller and/or media translation layer may determine if a pre-read buffer corresponding to a buffer ID (e.g., a buffer ID for a FIFO or WORO-FIFO buffer), is full. If the buffer is full, the method may loop at operation 1578-1 until the buffer is no longer full, at which point the method may proceed to operation 1578-2. At operation 1578-2, the device controller and/or media translation layer may sequentially read data beginning at an address indicated by an HPPA (e.g., head pointer) and/or read page offset from the buffer corresponding to the buffer ID and write it to the corresponding pre-read buffer. The device controller and/or media translation layer may update the HPPA and/or read page offset as data is read. In some embodiments, the device controller and/or media translation layer may also invalidate data as it is read.

At operation 1578-3, the device controller and/or media translation layer may determine if an entire block has been read. If not, the method may continue looping through operations 1578-1 and 1578-2 until an entire block has been read, at which point, the method may proceed to operation 1578-4. At operation 1578-4, the media translation layer may erase the block (in which data has been being invalidated sequentially as it has been read from the block). At operation 1578-5, based on the entire block being read, the device controller and/or media translation layer may extract the physical block address of the next block from the previous block and use it to update the HPPA. The method may then return to operation 1578-1.

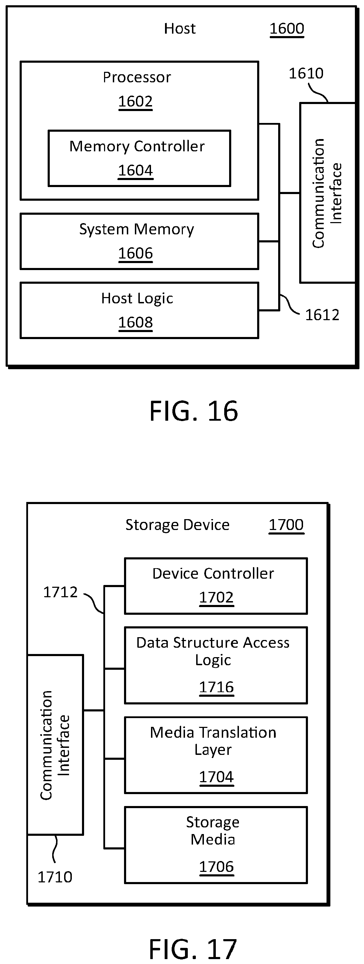

Fig. 16 illustrates an example embodiment of a host apparatus in accordance with example embodiments of the disclosure. The host 1600 illustrated in Fig. 16 may be used to implement any of the host functionality disclosed herein. The host 1600 may be implemented with any component or combination of components such as one or more processing units, one or more clients, one or more storage servers, one or more storage nodes, and/or the like, or a combination thereof.

The host apparatus 1600 illustrated in Fig. 16 may include a processor 1602, which may include a memory controller 1604, a system memory 1606, host control logic 1608, and/or communication interface 1610. Any or all of the components illustrated in Fig. 16 may communicate through one or more system buses 1612. In some embodiments, one or more of the components illustrated in Fig. 16 may be implemented using other components. For example, in some embodiments, the host control logic 1608 may be implemented by the processor 1602 executing instructions stored in the system memory 1606 or other memory.

The host control logic 1608 may include and/or implement any of the host functionality disclosed herein including issuing commands such as those described with respect to Table 1, providing a platform for applications, processes, and/or other data producers and/or data consumers as disclosed herein, and/or the like.

Fig. 17 illustrates an example embodiment of a storage device in accordance with example embodiments of the disclosure. The storage device 1700 illustrated in Fig. 17 may be used to implement any of the storage device functionality disclosed herein. The storage device 1700 may include a device controller 1702, a media translation layer 1704, a storage media 1706, data structure access logic 1716, and a communication interface 1710. The components illustrated in Fig. 17 may communicate through one or more device buses 1712. In some embodiments that may use flash memory for some or all of the storage media 1706, the media translation layer 1704 may be implemented partially or entirely as a flash translation layer (FTL).

In some embodiments, the data structure access logic 1716 may be used to implement any of the storage device functionality disclosed herein including buffer logic 430, command logic 1064, and/or any functionality related to implementing ordered access data structures, indicating data for modification based on reading the data, and/or the like.

As mentioned above, any of the functionality described herein, including any of the host functionality, storage device functionally, and/or the like, described herein may be implemented with hardware, software, or any combination thereof, including combinational logic, sequential logic, one or more timers, counters, registers, state machines, volatile memories such as DRAM and/or SRAM, nonvolatile memory and/or any combination thereof, CPLDs, FPGAs, ASICs, CPUs including CISC processors such as x86 processors and/or RISC processors such as RISC-V processors and/or ARM processors, GPUs, NPUs, and/or the like, executing instructions stored in any type of memory. In some embodiments, one or more components may be implemented as a system-on-chip (SOC).

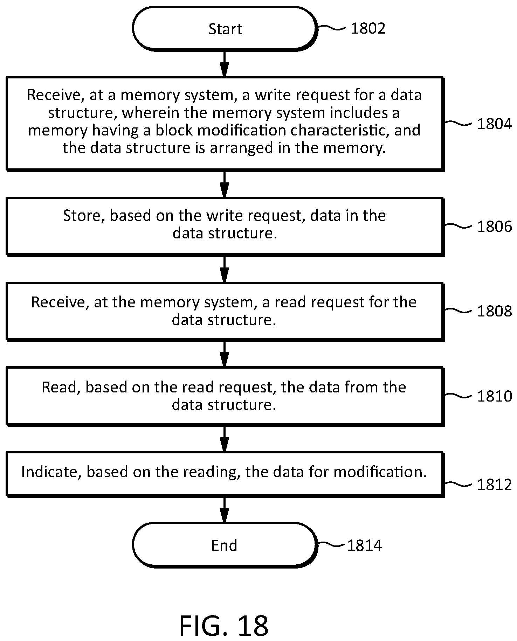

Fig. 18 illustrates an embodiment of a method for accessing data in a memory having a block modification characteristic in accordance with example embodiments of the disclosure. The method may begin at operation 1802. At operation 1804, the method may receive, at a memory system, a write request for a data structure, wherein the memory system includes a memory having a block modification characteristic, and the data structure is arranged in the memory. For example, the memory may be a block erase memory such as flash memory, and/or the data structure may be an ordered access data structure such as a FIFO buffer. At operation 1806, the method may store, based on the write request, data in the data structure. For example, the data may be stored based on a push command sent from a host to a storage device. At operation 1808, the method may receive, at the memory system, a read request for the data structure. For example, a pop command may be sent from a host to a storage device. At operation 1810, the method may read, based on the read request, the data from the data structure. For example, the data may be read from a FIFO buffer based on the pop command. At operation 1812, the method may indicate, based on the reading, the data for modification. For example, the data may be invalidated, for example, by marking for erasure during garbage collection. The method may end at operation 1814.

The embodiments illustrated in Fig. 18, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the things they modify and may not indicate any spatial or temporal order unless apparent otherwise from context. In some embodiments, a reference to a thing may refer to at least a portion of the thing, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner.

The various details and embodiments described above may be combined to produce additional embodiments according to the inventive principles of this patent disclosure. The inventive principles of this patent disclosure may be modified in arrangement and detail without departing from the inventive concepts as defined in the appended claims.

## Claims

1. A method comprising:
receiving, at a memory system, a write request for a data structure, wherein the memory system comprises a memory having a block modification characteristic, and the data structure is arranged in the memory;
storing, based on the write request, data in the data structure;
receiving, at the memory system, a read request for the data structure;
reading, based on the read request, the data from the data structure; and
indicating, based on the reading, the data for modification.

2. The method of claim 1, wherein the write request is a first write request, and the data is first data, the method further comprising:
receiving, at the memory system, a second write request for the data structure, wherein the first write request and the second write request have an order;
storing, based on the second write request, second data in the data structure; and
determining, based on the read request, based on the order, the first data;
wherein the reading is further based on the determining.

3. The method of claim 2, wherein the data structure is stored in one or more logically consecutive blocks of the memory.

4. The method of claim 3, wherein the one or more logically consecutive blocks of the memory comprises a linked list.

5. The method of any one of claims 2 to 4, wherein the data structure comprises a first-in-first-out (FIFO) structure.

6. The method of any one of claims 2 to 5, wherein the data structure is a first data structure, the read request is a first read request, and the first data structure is stored in a block of the memory, the method further comprising:
storing at least a portion of a second data structure in the block of the memory;
receiving, at the memory system, a second read request for the second data structure;
reading, based on the second read request, third data from the second data structure; and
indicating, based on the reading the third data, the third data for modification.

7. The method of any one of claims 2 to 6, further comprising:
fetching, based on the order, the first data; and
storing the first data in a buffer.

8. The method of any one of claims 2 to 7, further comprising modifying, based on the indicating, a block of the memory.

9. The method of any one of claims 2 to 8, further comprising:
accessing, by the memory system, the data structure using a tail pointer; and
updating, based on the storing the first data, the tail pointer.

10. The method of any one of claims 2 to 9, further comprising:
accessing, by the memory system, the data structure using a head pointer; and
updating, based on the reading the first data, the head pointer.

11. The method of any one of claims 1 to 10, further comprising returning, based on the reading, the data from the memory system.

12. A system comprising:
a memory system comprising a memory having a block modification characteristic;
a data producer; and
a data consumer;
wherein the data producer is configured to send, to the memory system, a write request for a data structure in the memory; and
wherein the data consumer is configured send, to the memory system, a read request for the data structure; and
wherein the memory system is configured to:
store, based on the write request, data in the data structure;
perform a read operation, based on the read request, of the data; and
indicate, based on the read operation, the data for modification.

13. The system of claim 12, wherein the write request is a first write request, and the data is first data, and wherein:
the data producer is further configured to send, to the memory system, a second write request for the data structure, wherein the first write request and the second write request have an order;
the memory system is further configured to:
store, based on the second write request, second data in the data structure; and
perform a determination, based on the read request, based on the order, of the first data; and
the read operation is further based on the determination.

14. The system of claim 13, wherein the memory system is further configured to:
fetch, based on the order, the first data; and
store the first data in a buffer.

15. The system of any one of claims 12 to 14, wherein the memory system is further configured to store, in one or more logically consecutive blocks of the memory, the data structure.
